Europäisches Patentamt

European Patent Office

Office européen des brevets

(19)

(11) Numéro de publication : **0 113 295**
**B1**

(12) FASCICULE DE BREVET EUROPÉEN

(45) Date de publication du fascicule du brevet :
02.03.88

(51) Int. Cl.⁴ : **G 01 B   5/00, G 01 B   5/02**

(21) Numéro de dépôt : 83402546.2

(22) Date de dépôt : 27.12.83

(54) Table de contrôle dimensionnel universel pour mesures intérieure et extérieure.

(30) Priorité : 31.12.82 FR 8222240
19.04.83 FR 8306349

(43) Date de publication de la demande :
11.07.84 Bulletin 84/28

(45) Mention de la délivrance du brevet :
02.03.88 Bulletin 88/09

(84) Etats contractants désignés :
AT BE CH DE FR GB IT LI LU NL SE

(56) Documents cités :
CH-A-   418 743
DE-C-   850 371
FR-A- 1 090 408
FR-A- 2 107 532
FR-A- 2 438 251
US-A- 2 607 123
US-A- 2 911 725

(73) Titulaire : BEAUPERE S.a.r.l.
Z.I. des Granges Route de Saint-Etienne
F-42602 Montbrison (FR)

(72) Inventeur : Beaupère, René
Route de St Etienne
F-42600 Montbrison (FR)

(74) Mandataire : Madeuf, René Louis et al
Cabinet Madeuf 3, Avenue Bugeaud
F-75116 Paris (FR)

## Description

La présente invention concerne une table de contrôle dimensionnel universel pour la mesure des cotes intérieures et extérieures, par comparaison après un étalonnage préalablement déterminé, des pièces diverses.

La cote à contrôler est mesurée par l'écartement d'une touche fixe par rapport à une touche mobile.

Ce genre d'appareil intéresse diverses activités de sous-traitances, propres ou intégrées, telles que la mécanique, le décolletage, l'usinage sur machines à commande numérique, l'estampage, le matriçage, par exemple, pour lesquelles l'assurance de la qualité doit se faire de la façon la plus économique, en fabrication et avec une précision suffisante, pour ne pas nuire à la compétitivité.

La multiplicité des contrôles que ce genre d'appareil permet est particulièrement économique, en permettant d'éviter l'emploi de tampons et calibres de toutes sortes, qui sont propres à une cote et dont l'usure est rapide, de même que l'emploi de nombreux appareils divers de contrôle qui sont aptes chacun à un seul genre de contrôle et, parfois, pour une plage dimensionnelle restreinte (pieds à coulisse, micromètres de mesure de diamètre intérieur ou extérieur, micromètres de mesure de gorges extérieures, micromètres de mesure de filetages ou taraudages, etc.) ; c'est en particulier le cas pour l'appareil pour indiquer les dimensions internes d'un objet décrit dans le FR-A-2 438 251.

Dans ce dernier cas, seules les cavités de forme diverses peuvent être contrôlées avec l'appareil. De même, dans le FR-A-1 090 408, l'appareil est destiné à mesurer des alésages, en particulier des gorges internes. En résumé, il ne s'agit en aucun cas d'appareils de contrôle dimensionnels universels d'où l'intérêt d'un tel appareil lorsque les pièces sont de formes très diverses et fabriquées en séries de moyennes ou petites importances.

L'appareil de l'invention permet entre autres les contrôles suivants : les diamètres intérieurs (alésage), les diamètres extérieurs, les diamètres intérieurs ou extérieurs difficilement accessibles, les diamètres de chambrages peu profonds (à partir de 1 mm de profondeur), les diamètres de gorges intérieures, les diamètres de gorges extérieures, les diamètres de gorges intérieures de petites dimensions, les diamètres intérieurs et extérieurs de gorges frontales, même quand celles-ci sont de faible largeur et que la pièce est de petites ou de grandes dimensions, la concentricité d'un alésage par rapport à un diamètre extérieur, la concentricité entre deux diamètres extérieurs, la concentricité entre deux diamètres intérieurs, la conicité, les filetages, les taraudages, les épaisseurs de toiles fines entre un diamètre extérieur et un diamètre intérieur, les longueurs, les parallélismes, les épaisseurs de fond de gorges linéaires, les profondeurs de rainures linéaires, les largeurs de rainures linéaires en T, les entre-axes.

Dans les appareils connus de ce genre, susceptibles d'effectuer une certaine multiplicité de contrôles, les uns sont rustiques et de précisions souvent insuffisantes, mais qui peuvent suffire en fabrication, et les autres sont à l'inverse élaborés, de haute précision et fort onéreux, mais pour lesquels l'utilisation en métrologie climatisée est nécessaire pour ne pas perdre leurs hautes performances qui sont par ailleurs souvent inutiles pour les activités considérées.

L'appareil de contrôle objet de la présente invention est utilisable en atelier grâce à sa robustesse, il assure une excellente précision, pour les activités considérées et avec une répétabilité remarquable, grâce aux différents procédés qu'il met conjointement en jeu.

La table de contrôle conforme à l'invention est définie et caractérisée par la revendication 1.

Diverses autres aspects de l'invention ressortent d'ailleurs de la description détaillée qui suit.

Des formes de réalisation de l'objet de l'invention sont représentées, à titre d'exemples non limitatifs, au dessin annexé.

La fig. 1 est une vue en perspective de l'appareil conforme à l'invention.

La fig. 2 est une vue en perspective de l'appareil mais vu de l'autre côté de celui représenté à la fig. 1.

La fig. 3 montre en perspective, à grande échelle, le dispositif de blocage de la touche fixe.

La fig. 4 montre en coupe un détail de la fig. 3.

La fig. 5 est une vue légèrement en perspective montrant en vue de dessous l'ensemble supportant la touche mobile de l'appareil.

La fig. 6 est une vue en perspective, à plus grande échelle, d'une pièce de la fig. 5.

La fig. 7 est une vue en perspective de dessous montrant le dispositif permettant le tarage de la pression de palpage, et l'inversion intérieure-extérieure de la course de la touche mobile.

Les fig. 8, 9 et 10 sont des coupes à grande échelle partielles de ce dispositif, les fig. 8 et 9 étant des coupes suivant les lignes A-A et B-B de la fig. 10.

La fig. 11 est une vue en perspective de dessous du dispositif permettant la manoeuvre de la touche mobile.

La fig. 12 est une vue en perspective de dessus montrant une première réalisation permettant de régler l'amplitude de la course de la touche mobile et son emplacement dans le plan touches-comparateur.

La fig. 13 est une vue de dessus montrant une variante de réalisation permettant la manoeuvre et le réglage d'amplitude de la touche mobile, ainsi que l'emplacement de sa course dans le plan touches-comparateur.

La fig. 14 montre en élévation un jeu de trois touches pour le contrôle de diamètres extérieur et intérieur.

La fig. 15 montre en élévation une autre forme de réalisation d'un jeu de trois touches.

La fig. 16 représente les touches pour le contrôle d'une pièce conique.

La fig. 17 montre en plan le contrôle d'une rainure linéaire en T.

La fig. 18 est une vue en élévation d'un jeu de touches pour chambrages peu profonds.

La fig. 19 est une vue en élévation et en plan de deux touches fines.

La fig. 20 est une vue en élévation et en coupe partielle de deux supports intermédiaires.

Les fig. 21, 22, 23 et 24 sont des élévations et des plans montrant le fonctionnement des touches fines de la fig. 19 montées sur les supports de la fig. 20.

La fig. 25 représente une vue en perspective d'une tablette amovible réglable.

La fig. 26 représente en élévation et en plan un jeu de touches pour le contrôle précis de diamètre à flancs de filets.

La fig. 27 est une élévation montrant l'utilisation des touches de la fig. 26 pour le contrôle d'un filetage intérieur.

La fig. 28 montre le contrôle d'un filetage extérieur à l'aide du dispositif de la fig. 27.

La fig. 29 montre en perspective un bloc de référence.

La fig. 30 montre en élévation et en plan un autre jeu de touches pour le contrôle des petits taraudages.

La fig. 31 montre l'utilisation des touches de la fig. 30.

La fig. 32 représente un jeu de touches pour le contrôle des entre-axes de deux trous.

La fig. 33 montre en élévation et en plan des touches pour le contrôle rapide de diamètre extérieur.

La fig. 34 est une vue en perspective et éclatée d'un support de butée.

La fig. 35 est une élévation d'une butée.

La fig. 36 montre en plan le contrôle rapide des diamètres extérieurs à l'aide de la butée de la fig. 35.

La fig. 37 montre en plan le contrôle de la concentricité entre un diamètre extérieur et un diamètre intérieur.

La fig. 38 montre en plan le contrôle de la concentricité entre deux diamètres extérieurs.

La fig. 39 représente le contrôle de la concentricité entre deux diamètres intérieurs.

La fig. 40 représente le contrôle en longueur entre deux touches.

La fig. 41 représente une cale pour l'appui de la pièce à contrôler.

La fig. 42 est une vue en plan d'une seconde possibilité du contrôle de longueur.

La fig. 43 représente le contrôle du parallélisme.

La fig. 44 représente le contrôle d'épaisseur.

La fig. 45 représente un support de touches fixe allongé.

La fig 46 représente en perspective un modèle de touche pour le contrôle des filetages intérieurs et extérieurs.

La fig. 47 est une élévation, à plus petite échelle, du dispositif de réglage des touches ci-dessus.

Les fig. 48 et 49 montrent les touches pendant le contrôle du filetage d'un écrou et le contrôle d'une tige filetée.

La fig. 50 est une vue en perspective montrant la touche utilisée pour le contrôle des filetages intérieurs de petit diamètre.

La fig. 51 montre le contrôle des filetages d'un écrou de petit diamètre.

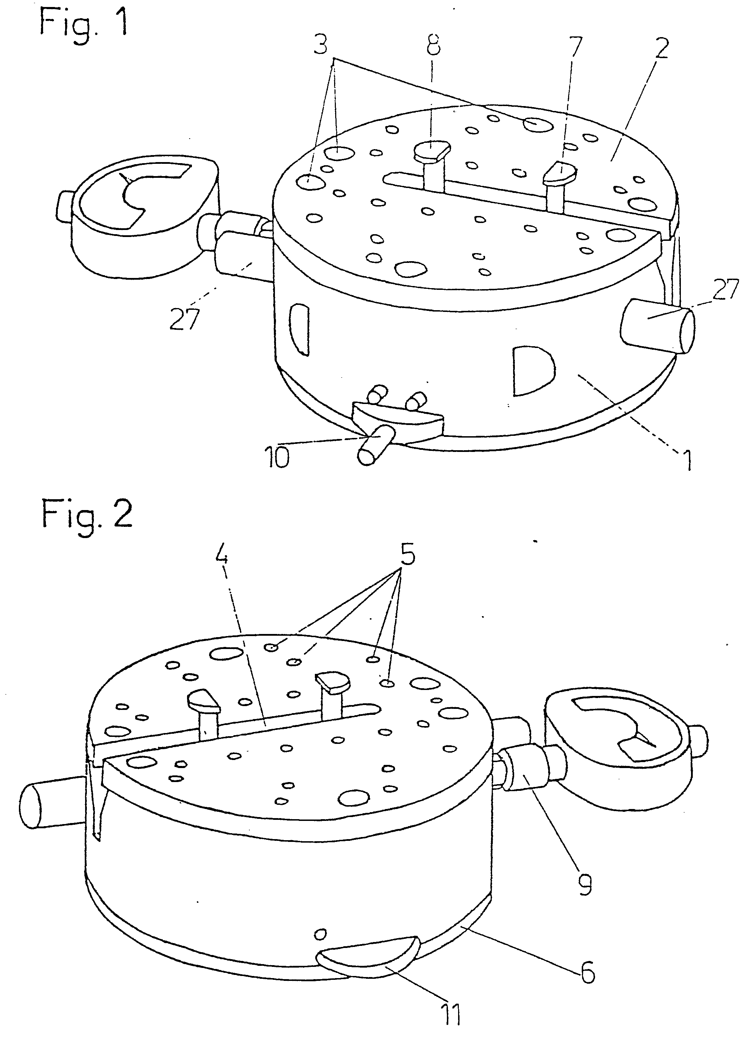

Les fig. 1 et 2 représentent extérieurement l'appareil qui comprend un corps 1 de forme cylindrique dans l'exemple représenté, une table de mesure 2 fixée sur le corps au moyen de six vis 3, présentant une ouverture 4 suivant environ les 3/4 d'un diamètre pour le passage des touches et une série de vingt quatre trous taraudés 5 répartis de façon appropriée pour la fixation de différents accessoires, un socle 6 fixé sous le corps au moyen de quatre vis, une touche fixe 7, une touche mobile 8, une pince de serrage 9 vissée dans le corps 1 pour la fixation d'un comparateur mécanique ou électronique, une fourchette de manœuvre 10 de la touche mobile, et une molette 11 d'inversion du mouvement de la touche mobile. Les mouvements de la touche mobile 8 sont transmis, par l'intermédiaire d'une enclume solidaire de la touche 8, au comparateur.

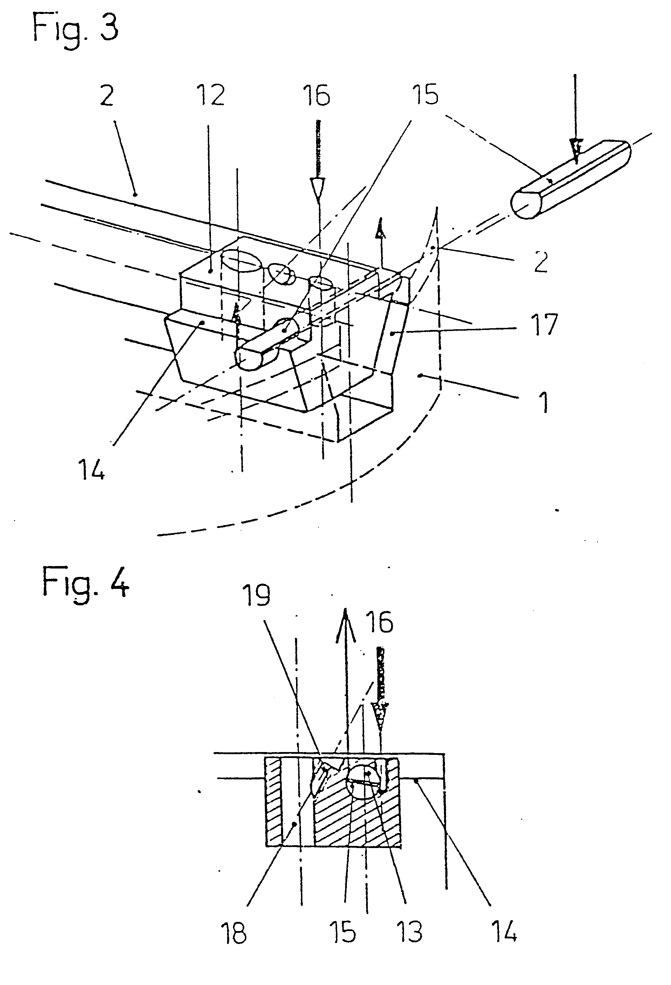

Le procédé pour le blocage de la touche fixe par rapport à la table de mesure est représenté aux fig. 3 et 4 qui montrent la conception différente du support 12 de touche fixe qui garantit non seulement le centrage parfait de la touche, mais également son blocage parfait.

Le support 12 de la touche fixe est un parallélépipède dont la section est définie par un rectangle dans sa partie supérieure, et par un trapèze isocèle renversé dans sa partie inférieure, qui est dans l'axe du rectangle et dont la grande base est plus longue que le côté de celui-ci avec lequel il se confond.

Le support 12 présente un alésage 13 perpendiculaire à son plan de symétrie et qui dépasse vers le haut le plan 14 défini par la grande base de sa section trapézoïdale. Dans cet alésage est logé un coin clavette 15 qui est un cylindre présentant un méplat longitudinal à sa partie supérieure, méplat qui se trouve légèrement plus bas que le plan 14. Une vis 16 appuyant sur un côté du méplat fait pivoter sur lui-même le coin clavette 15 dont le côté opposé du méplat, en s'appuyant sur la face inférieure de la table de mesure 2, fait descendre le support 12 jusqu'au coincement de sa partie inférieure de section trapézoïdale renversée avec la glissière 17 de section identique faisant partie du corps 1. D'une part, la force développée par la vis 16 permet un blocage puissant du support 12 et, d'autre part, le coincement des deux éléments mâle et femelle de même section trapézoïdale permet le centrage parfait de la touche fixe, l'axe de celle-ci étant dans le même plan que l'axe du comparateur.

La touche fixe 7, logée dans l'alésage 18, est fixée dans son support 12 par une vis, dont l'extrémité peut être arrondie ou conique, se montant dans le trou taraudé 19.

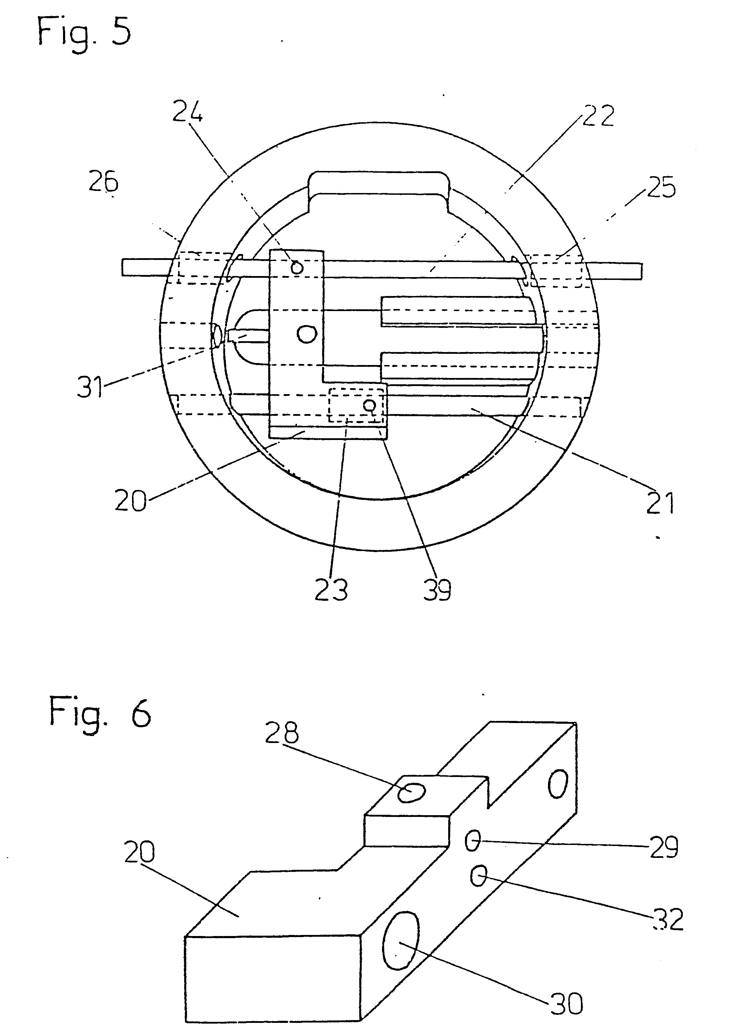

Le mécanisme pour le déplacement de la touche mobile représenté aux fig. 5 et 6 garantit le glissement parfait de l'ensemble support de touche mobile 8 et la perpendicularité de celle-ci, avec une réalisation peu onéreuse.

Le support 20, en forme d'équerre, de la touche mobile 8 est guidé pour son déplacement par deux axes parallèles qui le traversent mais dont l'un est fixe 21 et l'autre mobile 22 par rapport au corps 1.

Lorsqu'on déplace le support 20, il glisse par l'intermédiaire d'un palier 23 sur l'axe fixe 21, et entraîne l'axe mobile 22 qui lui est solidaire, grâce à une vis montée dans le trou taraudé 24, axe mobile 22 qui glisse au travers des parois opposées du corps 1 par l'intermédiaire de deux paliers 25 et 26. Le déplacement de la touche mobile 8 se fait au travers de trois paliers. Pour permettre la plus grande douceur du déplacement, et par voie de conséquence la plus grande sensibilité de contact de la touche mobile 8 (permettant ainsi le contrôle de pièces fragiles ou à paroi mince ou en général très déformables), les frottements sont réduits au minimum grâce aux trois paliers 23, 25 et 26 qui sont, d'une part, à billes, et, d'autre part, sans joint d'étanchéité, ou segment racleur, les dépassements extérieurs au corps 1 de l'axe mobile 22 étant protégés par deux capuchons 27 solidaires du corps 1 (voir fig. 1).

La touche mobile 8 se monte dans le trou calibré 28 où elle est bloquée par la vis 29. Le palier à billes 23 est ajusté dans le trou 30. L'enclume 31 qui transmet les mouvements de la touche mobile au comparateur est vissée dans le trou 32.

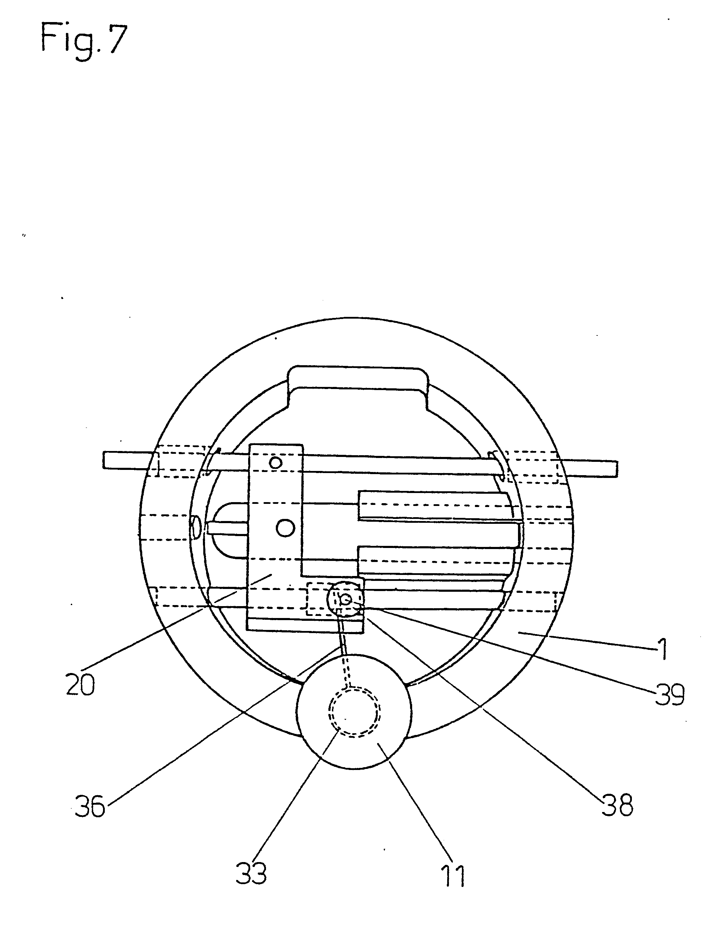

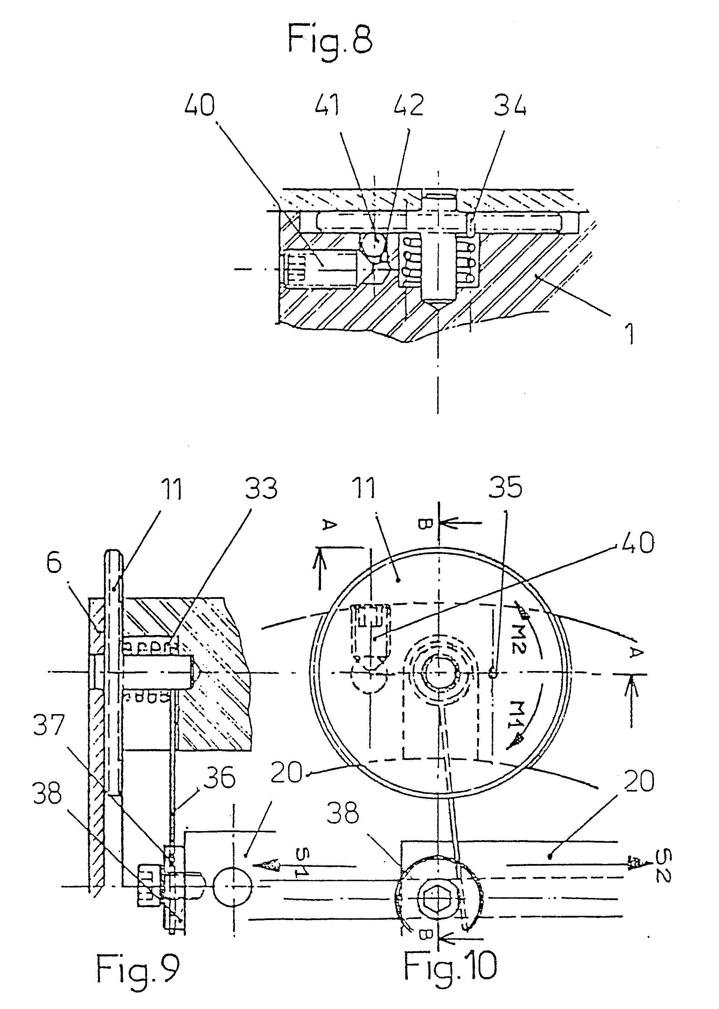

Aux fig. 7 à 10, on a représenté en vue de dessous, le socle 6 étant retiré, la conception particulière de la molette 11 qui permet non seulement et simultanément d'obtenir l'inversion du mouvement pour les mesures intérieures ou extérieures, mais également de partir de la pression zéro et d'augmenter celle-ci progressivement et régulièrement avec la plus grande facilité.

La molette 11 d'inversion et de tarage dont un secteur dépasse à l'extérieur du corps 1 présente deux épaulements d'inégale longueur faisant office d'axe de rotation, un épaulement inférieur, qui se loge dans un perçage du socle 6, et un épaulement supérieur, qui est coiffé par le ressort de torsion 33 dont l'extrémité se loge dans un trou borgne de la paroi du corps 1. L'extrémité inférieure 34 du ressort 33 qui est verticale se loge dans un trou 35 de la molette 11, et l'extrémité supérieure 36 qui, elle, est horizontale se prolonge pour traverser le perçage 37 de la rondelle d'entraînement 38 qui est libre de tourner autour de son axe 39 lequel est solidaire du support 20 de la touche mobile.

La table de contrôle étant posée sur son socle, si l'on tourne la molette dans le sens M1, elle bande progressivement le ressort dont l'extrémité horizontale 36 entraîne le support mobile 20 dans le sens S1, sous une force progressivement plus forte, appelée la pression de palpage ; vice versa si l'on tourne la molette dans l'autre sens.

Lorsque la pression de palpage désirée est obtenue, on bloque la molette 11 en vissant la vis-pointeau 40, laquelle forçant la bille 41 dans son logement 42 coincera la molette 11 entre elle et la face supérieure du socle 6.

La molette étant ainsi réglée, on dégage la touche mobile au moyen de la fourchette de manœuvre 10 (fig. 1) pour retirer la pièce contrôlée et poser la suivante, puis lâchant progressivement ladite fourchette et sous l'effet du ressort de torsion 33, la touche mobile vient au contact de la pièce suivante et sous la pression de palpage désirée.

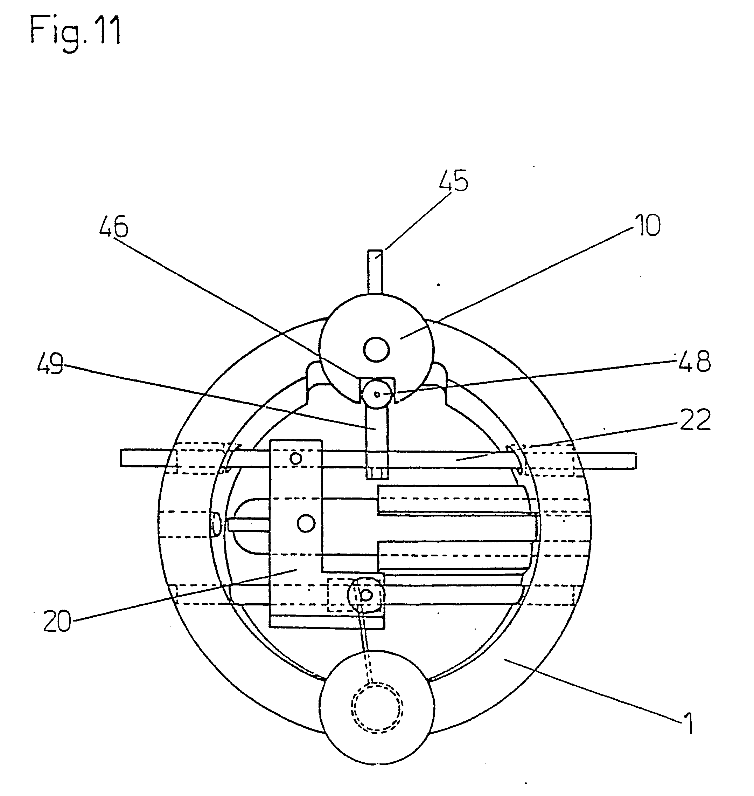

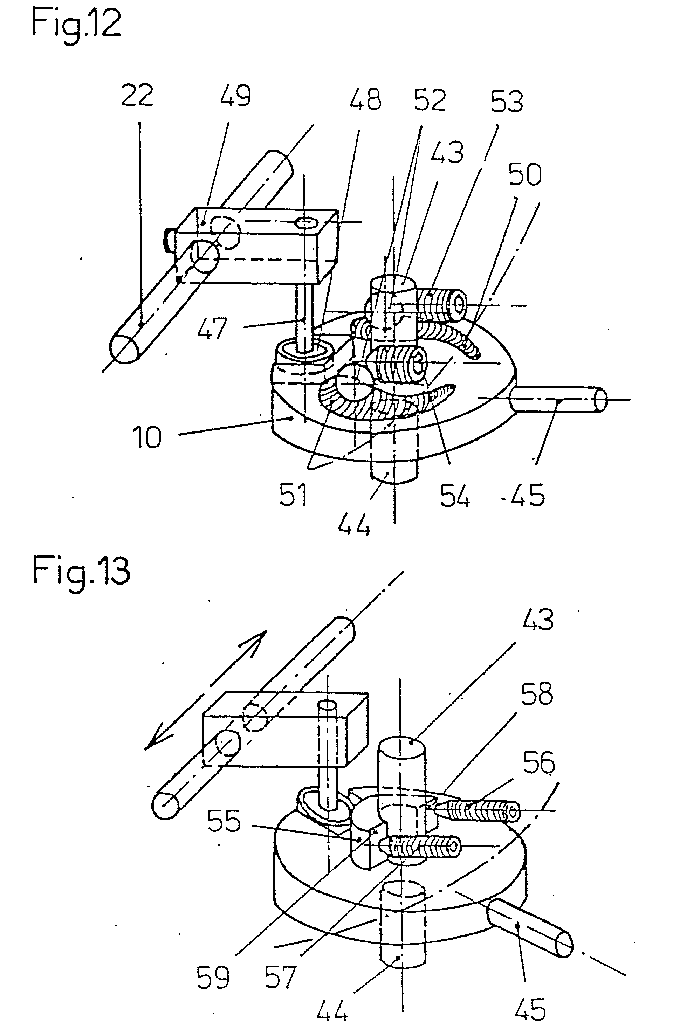

La manœuvre de la touche mobile, le réglage de l'amplitude de sa course et de son emplacement dans le plan touches-comparateur sont obtenus par les dispositifs représentés aux fig. 11 et 12.

La manœuvre de la touche mobile 8 est commandée par la fourchette de manœuvre 10, dont les deux parties 43 et 44 de l'axe de rotation sont logées respectivement dans un perçage vertical de la paroi du corps 1 et dans un perçage vertical du socle 6 (deux perçages verticaux dans lesquels sont emmanchés deux roulements à billes pour la plus grande souplesse de cette manœuvre), en agissant sur son doigt de manœuvre 45 qui dépasse à l'extérieur. La fourche 46, par l'intermédiaire du doigt de renvoi 47, en agissant sur le galet de ce doigt 48 (monté sur roulement à billes), déplace linéairement le renvoi 49 puisque ce dernier est solidaire de l'axe mobile 22 en entraînant celui-ci ainsi que le support de la touche mobile 20.

Dans cette première forme de réalisation, la fourchette 10 présente à sa face supérieure deux gorges 50 et 51 selon le même cercle, symétriques et de profondeur croissante du doigt de manœuvre 45 vers la fourche 46, dans lesquelles peuvent venir s'appuyer deux billes 52, logées dans deux trous borgnes verticaux de la paroi du corps 1 dont elles peuvent plus ou moins dépasser vers le bas sous l'action de deux vis-pointeaux 53 et 54. La face inférieure de la fourchette étant contre la face supérieure du socle 6, il suffit d'agir de l'extérieur sur les vis 53 et 54 pour que les billes, au niveau adéquat des gorges, permettent par coincement de la fourchette de déterminer l'amplitude de la course de la touche mobile et son emplacement dans le plan touches-comparateur.

A la fig. 13, la deuxième forme de réalisation est encore plus simple ; la fourchette 10 se présente comme dans la forme précédente, mais au lieu du système gorges, billes et vis-pointeaux, elle présente une demi-collerette 55 qui fait corps avec la fourchette 10, sur la face supérieure de celle-ci. Il suffit alors de régler de l'extérieur les deux vis 56 et 57 sur l'extrémité desquelles viendront buter les deux plans verticaux 58 et 59 de la demi-collerette, pour déterminer l'amplitude de la course de la touche mobile et son emplacement dans le plan touches-comparateur.

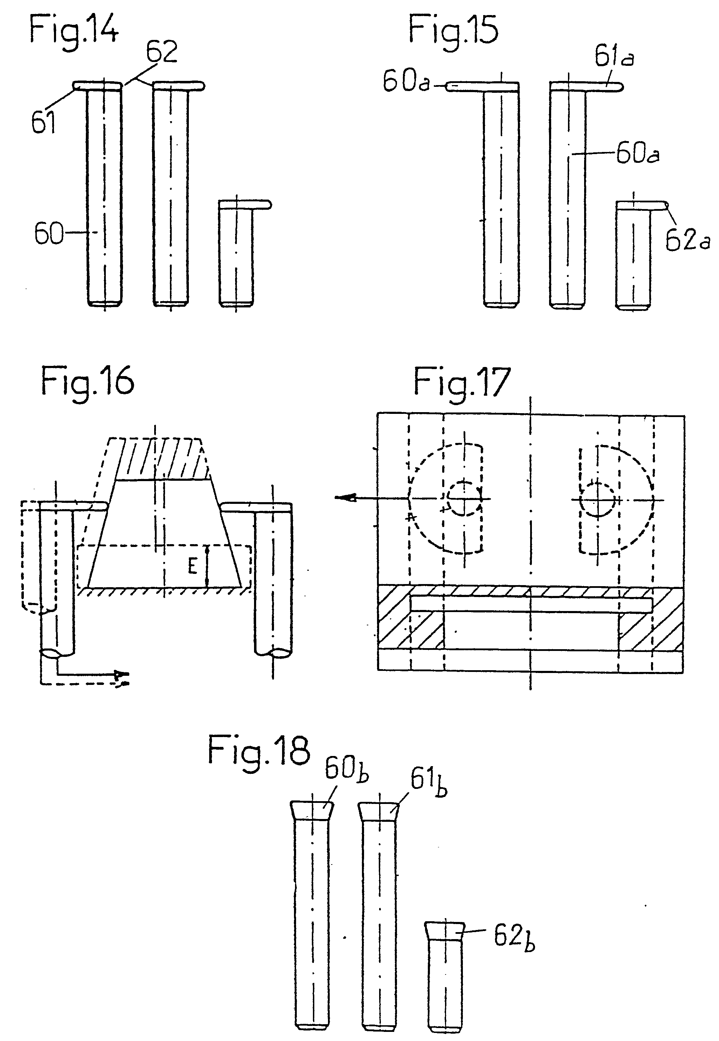

La fig. 14 représente un jeu de trois touches composées chacune d'un fût cylindrique 60 et d'une tête de palpage 61 en forme de disque à la tranche arrondie. Celle-ci peut être fraisée d'un méplat 62 pour augmenter la capacité de l'appareil vers les mesures d'alésages plus petits. La touche plus courte est utilisée en remplacement d'une longue quand le support de touche fixe 14 est bloqué dans l'autre sens que représenté fig. 3 et à l'extrémité de la table, c'est-à-dire au-dessus de la paroi du corps, pour ne pas être gêné par celle-ci ; ainsi la capacité de l'appareil est augmentée vers les mesures de diamètres plus grands. Le premier jeu permet les contrôles des diamètres extérieurs et intérieurs, des diamètres extérieurs et intérieurs des gorges frontales, et d'épaisseur de toile entre un diamètre extérieur et un diamètre intérieur.

La fig. 15 représente un jeu de trois touches 60a, 61a, 62a qui diffère du précédent par un plus grand diamètre de la tête de palpage. Il permet les contrôles des gorges extérieures et intérieures.

La fig. 16 représente un contrôle de la conicité qui se fait par deux contrôles successifs avec et sans cale étalon E, au moyen des touches précédentes 60a, 61a, 62a.

La fig. 17 représente un contrôle de largeur de rainure linéaire en T qui se fait au moyen des touches précédentes.

La fig. 18 représente un jeu de trois touches 60b, 61b, 62b qui diffère du précédent par la tête de palpage en forme de tronc de cône renversé. Il permet les contrôles des diamètres des chambrages peu profonds.

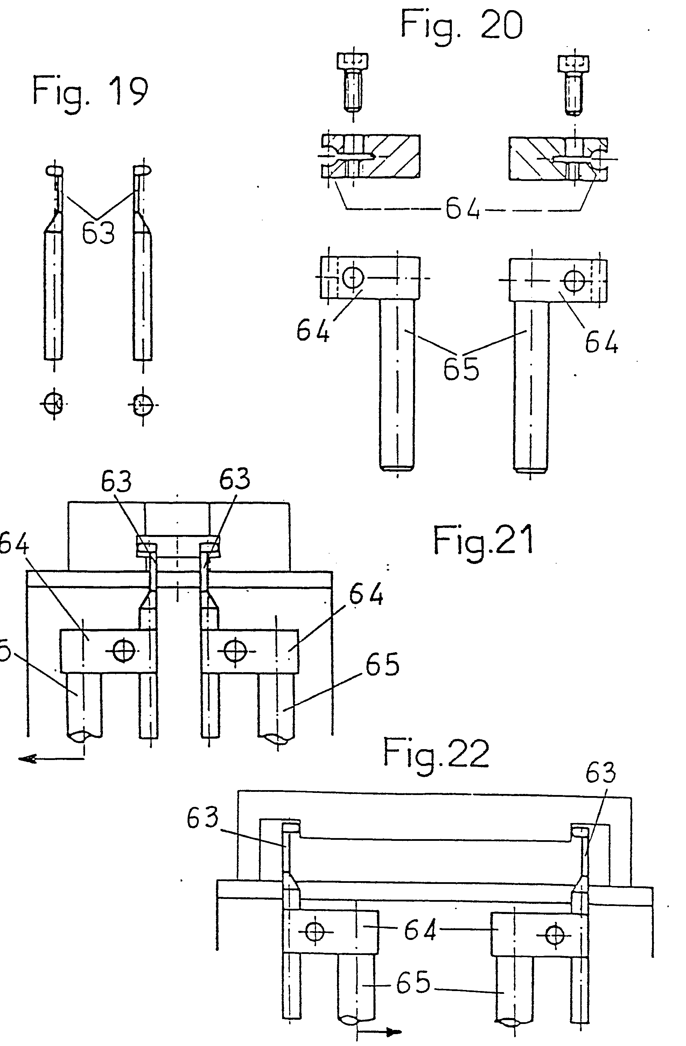

La fig. 19 représente un jeu de deux touches fines qui présentent un collet 63 entre la tête de palpage et le fût.

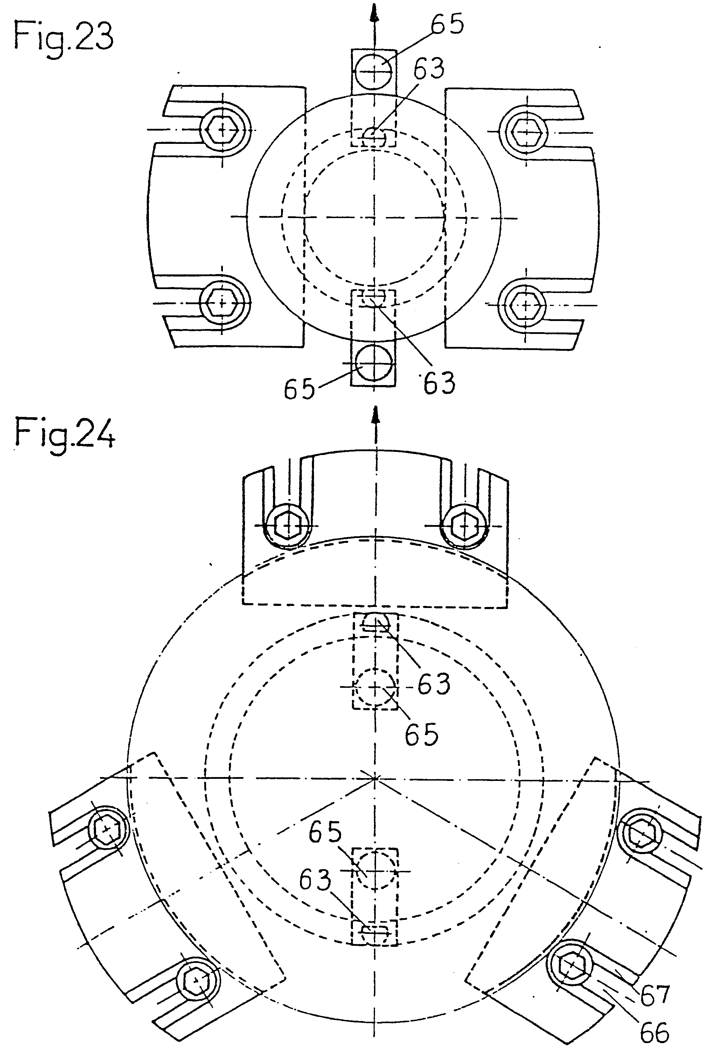

La fig. 20 représente un jeu de deux supports intermédiaires des touches fines ci-dessus, qui présentent une pince de serrage 64 pour fixer une touche fine, et un fût 65 identique au 60. Il permet les contrôles des diamètres et des gorges intérieures de petites dimensions (fig. 21), des diamètres difficilement accessibles (fig. 22) et des diamètres intérieurs ou extérieurs des gorges frontales de faible largeur (fig. 23 et 24).

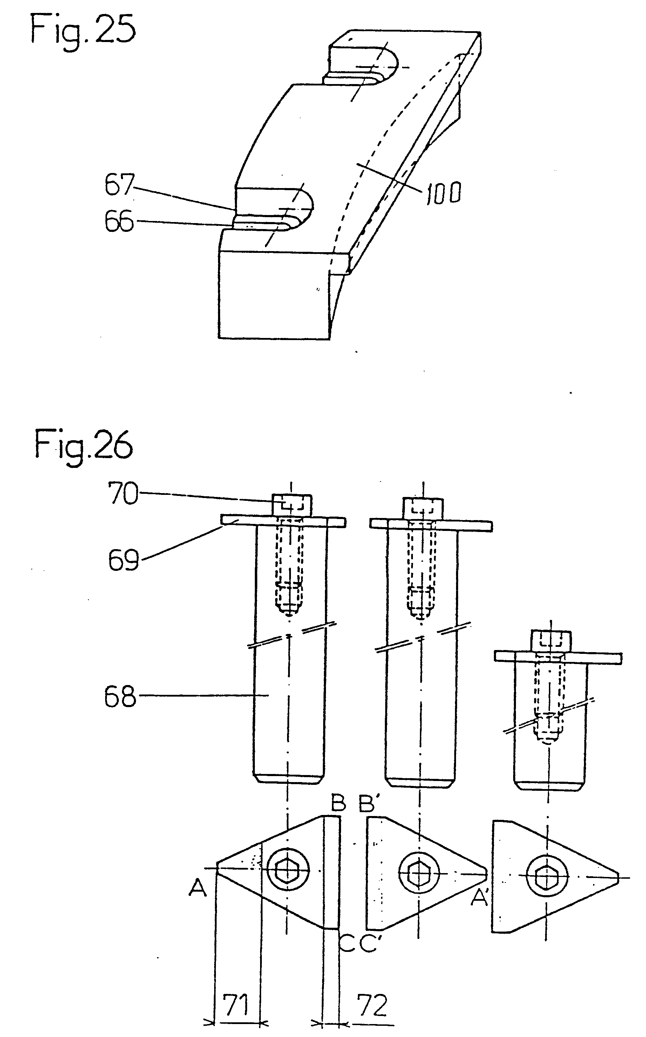

La fig. 25 représente une tablette amovible réglable 100 qui se visse sur la table de mesure 2 dans les trous taraudés 5 appropriés, le corps des vis passant dans la lumière inférieure 66, et la tête appuyant sur l'épaulement engendré par la lumière supérieure 67 où elle se noie. Le réglage se fait grâce à ces lumières en avançant ou en reculant la tablette par rapport aux deux vis avant leur blocage. Ces tablettes, sur lesquelles est posée la pièce à mesurer, sont à utiliser pour les contrôles des fig. 21 à 24.

La fig. 26 représente un jeu de trois touches de nouvelle conception pour le contrôle précis des diamètres à flancs de filets des filetages intérieurs ou extérieurs et de la conicité de ceux-ci. Elles sont composées chacune d'un fût cylindrique 68, identique au fût 60, et d'une tête de palpage 69 fixée au fût par une vis 70. La tête 69 est en forme de triangle isocèle BAC et d'épaisseur égale à la moitié du pas du filetage à contrôler.

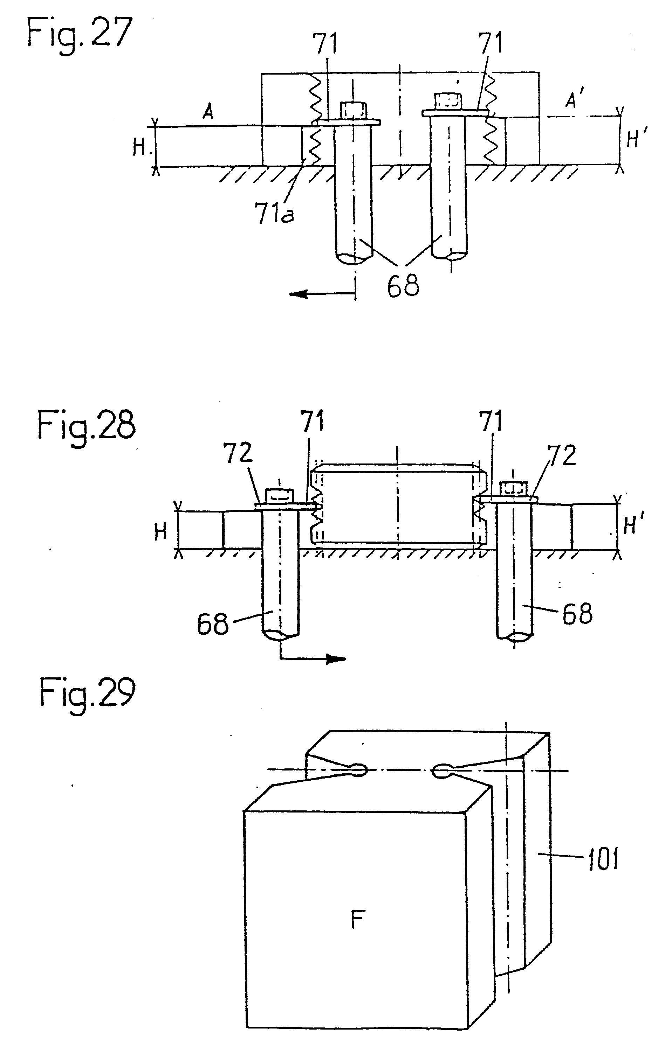

La fig. 27 représente un contrôle de filetage intérieur qui s'effectue de la façon suivante : les deux plats de palpage A et A' devant être parfaitement perpendiculaires au plan touches-comparateur (soit l'axe AA' dans ce plan), il suffit pour le réglage de l'une des touches de faire toucher les bases BC et B'C', de placer une cale étalon 71a de hauteur H sous son bec 71 et de serrer la vis qui la bloque sur son support ; pour le réglage de l'autre touche, il suffit de plaquer sa base sur une cale étalon quelconque, elle-même plaquée sur la base de la touche réglée, de placer une cale étalon sous son bec, de hauteur H' égale à H plus ou moins un demi pas, et de serrer la vis qui la bloque sur son support.

La fig. 28 représente un contrôle de filetage extérieur qui s'effectue de la façon suivante : le réglage des deux touches se fait au moyen d'un bloc de référence 101 représenté fig. 29. C'est un parallélépipède rectangle parfait présentant deux rainures en V opposées et d'angle égal à l'angle BAC. Il suffit pour le contrôle de présenter les becs des deux touches dans les rainures en V, de placer sous le talon 72 de l'une des touches une cale étalon de hauteur H, et sous le talon de l'autre touche une cale étalon de hauteur H' (comme ci-dessus), et de serrer les vis qui les bloquent sur les supports.

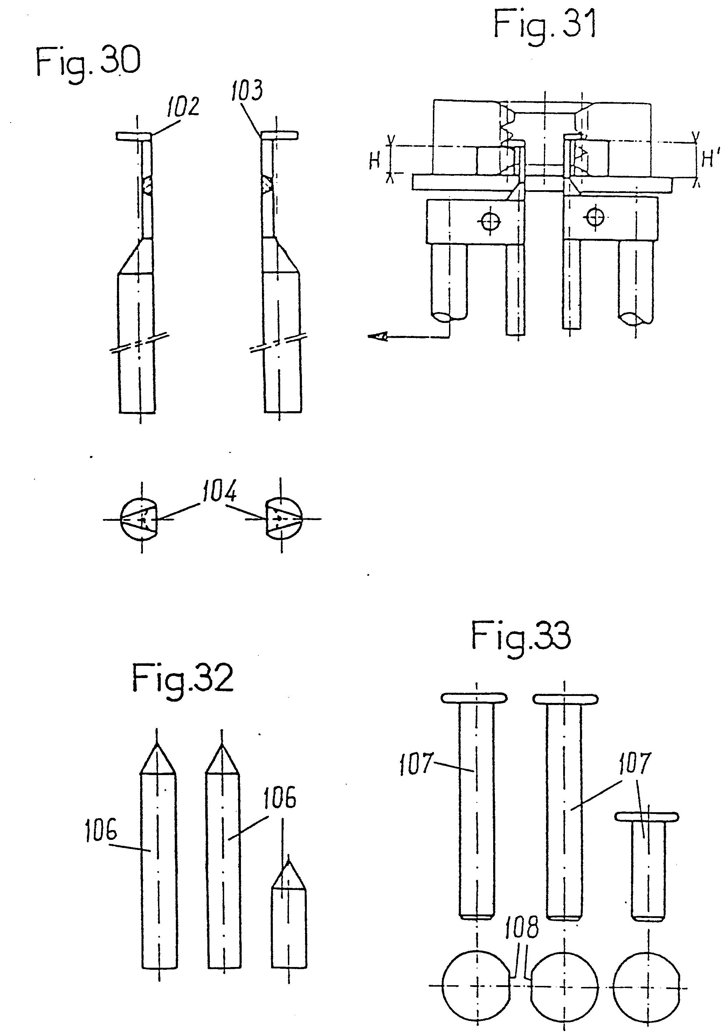

La fig. 30 représente un jeu de deux touches 102, 103 pour le contrôle des filetages intérieurs de petits diamètres, ayant les mêmes géométries et dimensions que les touches fines représentées fig. 19, sauf les têtes de palpage qui ont les mêmes caractéristiques que celles des touches représentées à la fig. 26 mais sans talon, un méplat longitudinal 104 en faisant office.

La fig. 31 représente ce contrôle de filetage intérieur de petit diamètre qui s'effectue de la façon suivante : les touches représentées à la fig. 30 sont montées sur deux supports intermédiaires de touches fines représentées à la fig. 20, en plaquant l'un contre l'autre leurs méplats et sous les becs desquelles sont placées deux cales étalons de hauteur H et H' comme précédemment, la pièce à contrôler étant posée sur deux tablettes amovibles réglables représentées à la fig. 25.

La fig. 32 représente un jeu de trois touches 106 pour le contrôle des entre-axes entre deux trous, de diamètres inférieurs à celui du fût des touches, qu'ils débouchent ou non dans le même plan.

La fig. 33 représente un jeu de trois touches 107 pour le contrôle rapide des diamètres extérieurs, qui diffèrent des touches représentées à la fig. 14 par un méplat 108 moins prononcé de la tête, méplat qui est, à l'inverse de celles-ci, le méplat de palpage.

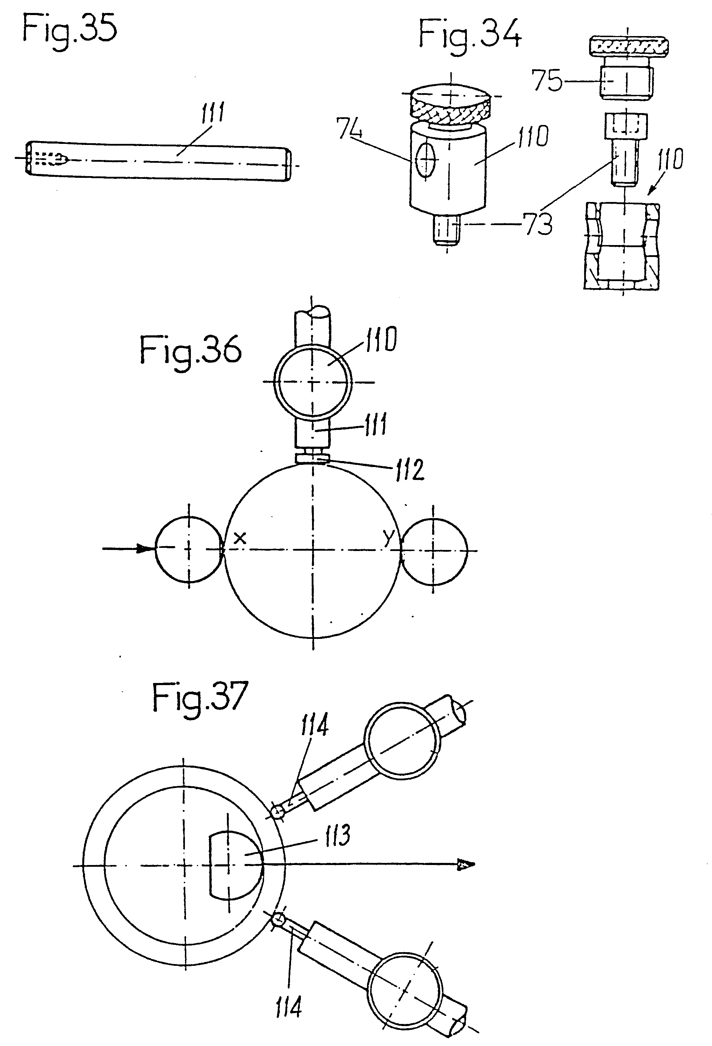

La fig. 34 en perspective et en vue éclatée représente un support de butée 110 qui se fixe sur la table de mesure 2 grâce à la vis 73 dans un trou taraudé 5 approprié.

La fig. 35 représente la butée 111 qui se monte dans le trou 74 du support de butée ci-dessus, où il est bloqué à la position appropriée par le bouchon fileté 75. Elle présente à une extrémité un trou taraudé pour recevoir le palpeur approprié du commerce.

La fig. 36 représente ce contrôle rapide des diamètres extérieurs, un palpeur plat du commerce 112 étant monté sur la butée.

La fig. 37 représente le contrôle de la concentricité d'un alésage par rapport à un diamètre extérieur entre la touche mobile 113 et deux palpeurs à boule du commerce 114 montés sur deux butées dont les supports sont fixés sur la table de mesure, symétriquement au plan touches-comparateur.

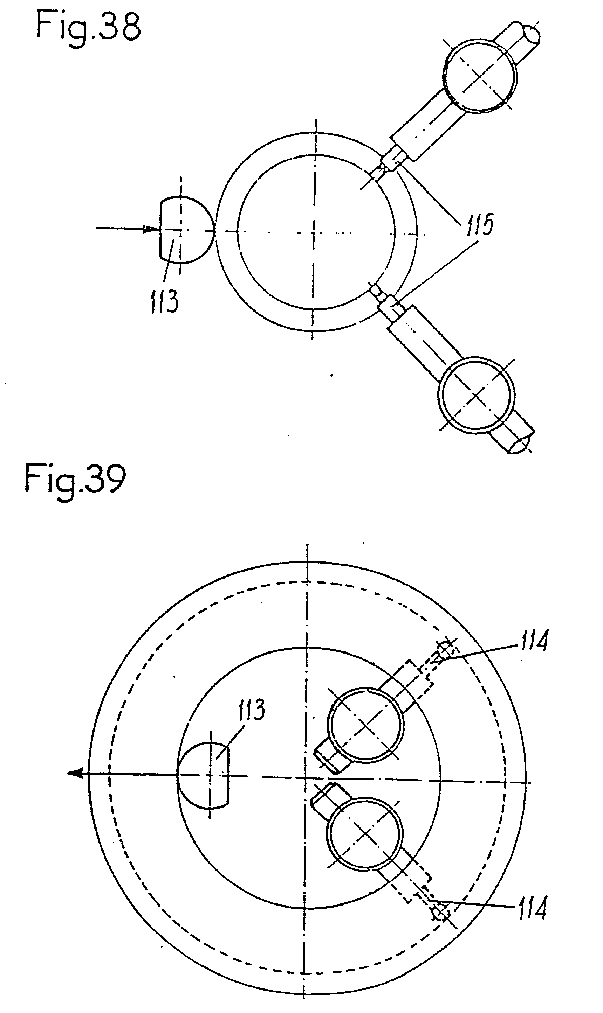

La fig. 38 représente le contrôle de la concentricité entre deux diamètres extérieurs, semblable au précédent mais en utilisant deux palpeurs biseautés du commerce 115.

La fig. 39 représente le contrôle de la concentricité entre deux diamètres intérieurs, semblable à celui de la fig. 37 mais de sens contraire.

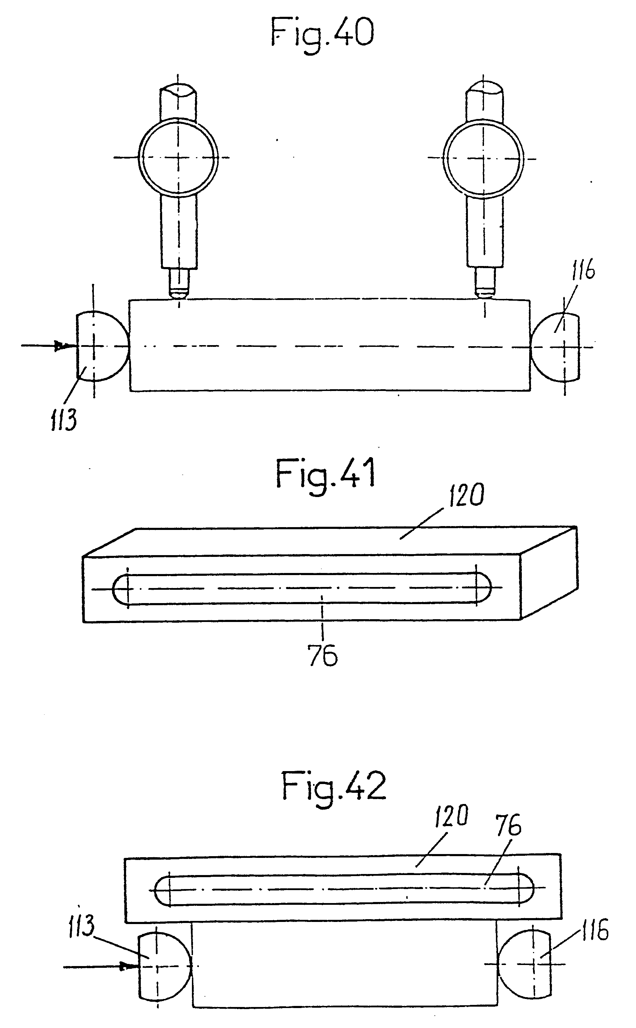

La fig. 40 représente le contrôle de longueurs entre les deux touches 113 et 116, la pièce étant en appui sur deux palpeurs bombés du commerce, montés sur deux butées dont les supports sont fixés sur la table de mesure, perpendiculairement au plan touches-comparateur et à égale distance de celui-ci.

La fig. 41 représente une cale 120 pour l'appui de la pièce à contrôler. C'est un parallélépipède rectangle parfait en acier trempé et rectifié, présentant une lumière 76 aux deux faces parallèles, pour le passage de deux vis qui fixeront la cale sur la table de mesure, en se montant dans deux trous taraudés 5 appropriés.

La fig. 42 représente une seconde possibilité du contrôle de longueurs.

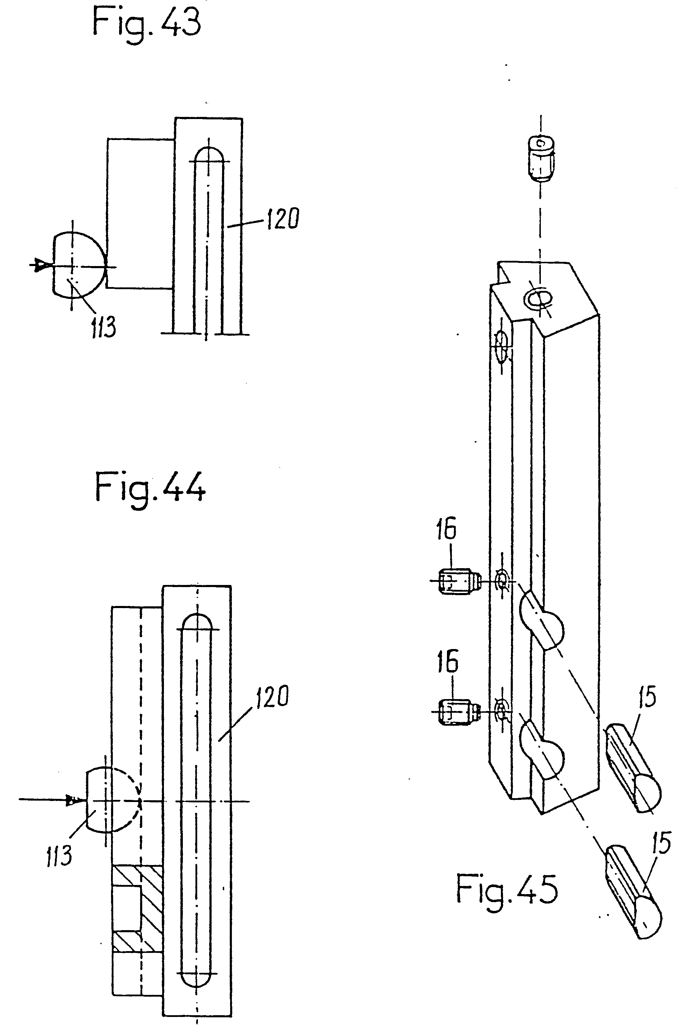

La fig. 43 représente le contrôle de parallélisme.

La fig. 44 représente le contrôle d'épaisseur de fond de gorge linéaire et de son parallélisme.

La fig. 45 représente un support de touche fixe allongé, ayant les mêmes caractéristiques que celui des fig. 3 et 4, permettant d'accroître la capacité de l'appareil de contrôle.

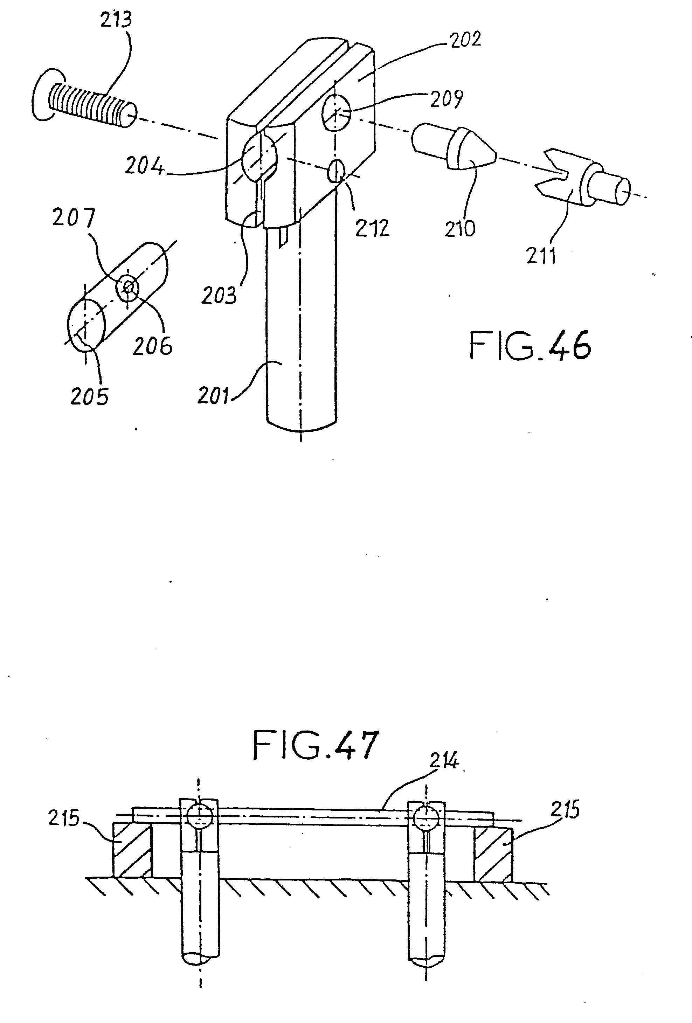

A la fig. 46, le fût 201 se fixe sur les supports de touches fixe et mobile de la table de contrôle. La tête 202, solidaire du fût, présente un fraisage étroit 203 qui la sépare en deux parties. Un trou lisse 204 de part en part reçoit un cylindre orientable 205, lequel est percé d'un trou 206 avec une face d'appui 207, trou 206 qui se présentera dans l'axe du trou 209 de la tête. Un palpeur de filetage identique à ceux montés sur les micromètres, mâle 210 ou femelle 211, se monte librement et sans jeu dans le trou 206, s'appuie sur la face 207 au travers du trou 209 dont le diamètre lui est largement supérieur pour permettre son débattement par rapport à l'axe du cylindre orientable 205. Un trou 212 de part en part de la tête est fileté d'un côté de la fente, et lisse de l'autre côté mais d'un diamètre légèrement supérieur à celui qui est fileté. Une vis 213 montée du côté lisse se vissera ensuite de l'autre côté pour permettre la fermeture de la fente 203, donc le blocage dans la position désirée du cylindre 205.

Lorsque l'on veut contrôler un filetage, deux touches (Fig. 46) sont montées sur les supports de touches de la table de contrôle ; ces deux touches reçoivent deux palpeurs de filetage l'un mâle et l'autre femelle, palpeurs soit intérieurs et tournés vers l'extérieur pour le contrôle des filetages intérieurs, soit extérieurs et tournés vers l'intérieur pour le contrôle des filetages extérieurs.

Pour garantir la qualité et la précision de ces contrôles, il faut que les deux palpeurs de filetage mâle et femelle soient rigoureusement dans le même axe, d'une part, et que celui-ci soit rigoureusement parallèle à la face d'appui de la table de mesure, d'autre part. On obtient facilement et rapidement ce double résultat (voir fig. 47) au moyen d'un axe trempé rectifié 214, de même diamètre que les trous 206, également trempés et calibrés, en passant par ceux-ci et en reposant sur deux cales étalons identiques 215 et appropriées à la position du contrôle à effectuer sur la pièce. Les deux trous 206 des deux cylindres orientables 205 prennent alors l'axe parfait de mesure qu'il suffit de maintenir au moyen, d'une part, des vis 213 qui bloquent les cylindres 205 et, d'autre part, des vis de blocage des touches (qui avaient été préalablement débloquées) qui bloquent les touches en hauteur sur leur support respectif.

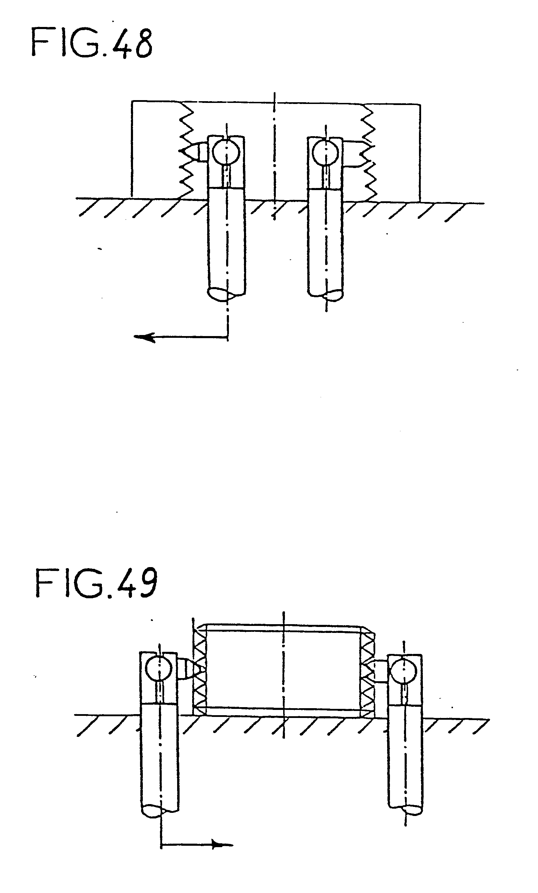

Le contrôle du filetage intérieur (fig. 48) se fait par comparaison à la bague filetée correspondante.

Le contrôle du filetage extérieur (fig. 49) se fait par comparaison au tampon fileté correspondant.

Il est important de constater :

1) que le contrôle est identique à celui du palmer à flanc de filet mais avec une plus grande précision (inférieure à 1/100 mm),

2) que les bagues et tampons filetés, qui ne servent qu'une seule fois pour l'étalonnage de l'appareil, ne souffrent d'aucune usure et sont à considérer comme des étalons.

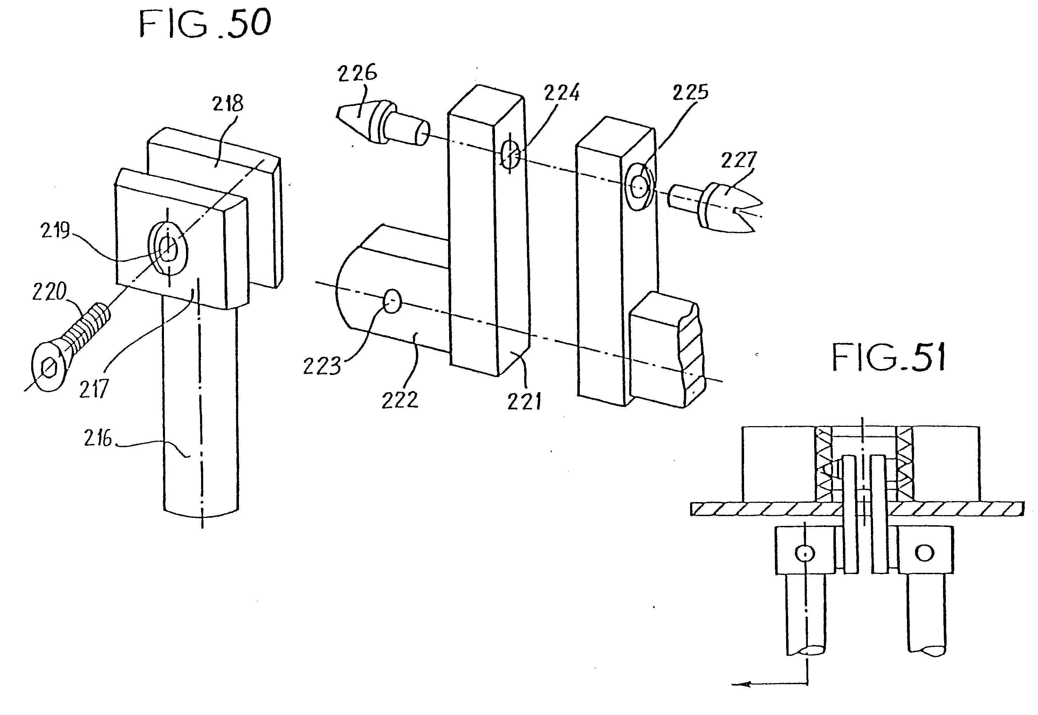

La fig. 50 représente la version du modèle de touche présenté à la fig. 46, pour le contrôle des filetages intérieurs de petit diamètre.

Le fût 216 se fixe sur les supports de touches (fixe et mobile) de la table de contrôle. La tête 217 solidaire du fût présente un fraisage large 218 qui la sépare en deux parties. Un trou 219 de part en part de la tête est lisse d'un côté du fraisage et fileté de l'autre ; le diamètre de sa partie lisse est légèrement supérieur à celui de sa partie filetée ; une vis 220 montée du côté lisse se vissera ensuite de l'autre côté pour faire office d'axe d'articulation pour le doigt orientable 221 composant la touche et permettre le blocage de celle-ci par fermeture de la fente 218.

Le doigt orientable 221 est en forme d'équerre. Sa partie horizontale 222, percée d'un trou 223 pour le passage de la vis 220, peut pivoter par rapport à celle-ci dans la fente 218. Sa partie verticale, solidaire de la précédente, présente à son extrémité un trou 224, qui peut être épaulé 225, du côté extérieur, pour recevoir librement mais sans jeu l'un des deux palpeurs de filetage intérieurs, mâle 226 ou femelle 227.

Lorsque l'on veut contrôler un filetage intérieur de petit diamètre, les supports de touches de la table de contrôle reçoivent chacun une touche (voir fig. 50) de la même manière que précédemment pour les touches (voir fig. 46). On procède également comme précédemment pour que les deux palpeurs de filetage intérieurs 226 et 227 soient rigoureusement dans le même axe, et que celui-ci soit rigoureusement parallèle à la face d'appui de la table de mesure, l'axe 214 étant de même diamètre que les trous 224 passant par ceux-ci et reposant sur deux cales étalons identiques. Il suffit dans ce cas pour maintenir les trous 224 dans l'axe parfait de mesure, d'une part, de bloquer les doigts orientables 221 au moyen des vis 220 et, d'autre part, de bloquer les touches proprement dites (voir fig. 50) dans leurs supports respectifs.

Le contrôle de filetage intérieur de petit diamètre (voir fig. ·51) s'effectue comme pour celui représenté (voir fig. 48).

Les possibilités de l'appareil ne se limitent pas aux vingt cinq contrôles ci-avant ; la diversité des accessoires décrits et la possibilité d'en concevoir spécialement permettent en effet de donner une solution au problème de contrôle dimensionnel posé par n'importe quelle pièce, dans les limites de la capacité de la table de contrôle et de sa sensibilité de palpage.

**Revendications**

1. Table de contrôle dimensionnel universel pour mesures intérieure et extérieure comportant un comparateur et permettant de contrôler une cote par rebroussement entre une touche fixe (7) montée sur un axe et une touche mobile (8) par comparaison avec un étalonnage préalablement déterminé, caractérisée en ce qu'elle comprend les composants suivants :

a) un premier support (12) destiné à la touche fixe (7), l'axe de la touche fixe (7) et celui du comparateur étant situés dans un même plan vertical et le support (12) dont la partie inférieure présente une section en forme de trapèze isocèle inversé, reposant sur une glissière (17), de même section pratiquée en creux dans un corps (1) cylindrique portant une table de mesure (2),

b) le premier support (12) comportant un coin clavette (15) de forme cylindrique avec un méplat longitudinal dont une vis (16) assure le pivotement dans un alésage (13) qui traverse le premier support (12) par appui sur l'un des côtés de ce méplat pour assurer un coincement dudit coin clavette (15) contre la face inférieure de la table de mesure (2),

c) un deuxième support (20), en forme d'équerre, assurant le centrage et le positionnement perpendiculaire de la touche mobile (8) par rapport à la table de mesure (2) présentant une face d'appui ; ce centrage et ce positionnement de la touche mobile (8) étant obtenus par le deuxième support (20) à l'aide d'un axe mobile (22) qui lui est solidaire et d'un axe fixe (21) solidaire dudit corps cylindrique (1), l'axe fixe (21) étant parallèle à l'axe mobile (22),

d) trois paliers (23, 25, 26) à billes dont l'un (23) est logé dans le deuxième support (20) et les deux autres (25, 26) dans la paroi du corps (1) et deux capuchons protecteurs (27) sont fixés sur ce même corps (1) pour protéger à l'extérieur les deux extrémités de l'axe mobile (22).

2. Table de contrôle dimensionnel universel suivant la revendication 1, caractérisée en ce qu'une molette (11), dépassant à l'extérieur du corps (1) cylindrique pour permettre l'inversion du mouvement vers l'intérieur et vers l'extérieur de la touche mobile (8), est réalisée par deux épaulements verticaux inférieur et supérieur, l'épaulement supérieur étant coiffé par un ressort de torsion (33) dont une extrémité inférieure est verticale et située dans un trou (35) de la molette (11) et dont une extrémité supérieure est horizontale et traverse un perçage (37) d'une rondelle libre d'entraînement (38) dont l'axe est solidaire du deuxième support (20).

3. Table de contrôle dimensionnel universel suivant la revendication 2, caractérisée en ce que le ressort de torsion (33) règle le tarage de la pression de palpage de la touche mobile (8) et exerce une pression progressive sur la molette (11) dans l'un et l'autre sens de rotation de cette dernière.

4. Table de contrôle dimensionnel universel suivant l'une des revendications 2 ou 3, caractérisée en ce qu'une bille (41) logée dans un trou (42) pratiqué dans le corps (1) permet le blocage de la molette (11) par coincement entre la face supérieure de celle-ci et l'extrémité d'une vis-pointeau (40) dont la commande est placée à l'extérieur de la table de mesure (2).

5. Table de contrôle dimensionnel universel suivant la revendication 1, caractérisée en ce que la touche mobile (8) est actionnée par un organe de manœuvre comportant :

a) une fourchette (10) tournant dans un sens ou dans l'autre, en agissant sur un doigt de manœuvre (45) qui est solidaire de la fourchette (10) et qui est accessible de l'extérieur de la base de la table de mesure (2),

b) un évidement (46) pratiqué dans la fourchette (10) entraîne un galet (48) d'un doigt de renvoi (47) et déplace linéairement le deuxième support (20) par l'intermédiaire d'un renvoi (49).

6. Table de contrôle dimensionnel universel suivant la revendication 5, caractérisée en ce qu'une première paire de vis-pointeaux (53, 54) agit sur deux billes (52) se déplaçant dans deux gorges (50, 51) disposées sur un même cercle, symétriques et de profondeur croissant à partir d'un doigt (45) vers ledit évidement (46), celui-ci étant situé sur la face supérieure de la fourchette (10), pour permettre le réglage de l'amplitude de la course de la touche mobile (8) et de son emplacement dans ledit plan vertical.

7. Table de contrôle dimensionnel universel suivant la revendication 5, caractérisée en ce qu'une seconde paire de vis-pointeaux (56, 57) réglée de l'extérieur pour permettre la rotation de la fourchette (10), présente des extrémités formant butées pour deux plans verticaux (58, 59) d'une demi-collerette (55) située à la face supérieure de la fourchette (10) et faisant corps avec elle pour régler l'amplitude de la course de la touche mobile (8) et son emplacement dans ledit plan vertical.

8. Table de contrôle dimensionnel universel suivant la revendication 1, caractérisée en ce qu'elle comporte, en outre, deux touches (68) destinées au contrôle des filetages et comportant chacune une tête de palpage (69) en forme de triangle isocèle, d'épaisseur égale à un demi-pas du filetage à contrôler et des tranches parallèles entre elles, perpendiculaires aux deux faces des têtes de palpage (69), chaque tête de palpage (69) présentant à son extrémité pointue un méplat ou bec (A, A') parallèle à sa base (BC, B'C').

9. Table de contrôle dimensionnel universel suivant l'une des revendications 1, 7 et 8, caractérisée en ce qu'elle comporte, en outre :

a) un bloc de référence (101) en forme de parallélépipède rectangle présentant deux rainures en V opposées d'angle égal à celui des becs, utilisé avec deux cales étalons, de hauteurs H et H plus ou moins un demi-pas (= H'), pour le contrôle des filetages extérieurs ; le bloc (101) reposant sur la table de mesure (2) par un de ses grands côtés,

b) deux touches fines (102, 103) montées sur deux supports intermédiaires (64, 65) et deux tablettes amovibles réglables (100) fixées sur la table (2) permettant le contrôle des filetages intérieurs de petits diamètres,

c) des tablettes amovibles (100) pour le contrôle de pièces de petites dimensions se vissant sur la table (2) dans des trous taraudés (5), le corps des vis utilisées à cet effet passant par une lumière inférieure (66) et une tête appuyant sur un épaulement engendré par une lumière supérieure (67) où elle se noie.

10. Table de contrôle dimensionnel universel suivant la revendication 1, caractérisée en ce qu'elle comporte également :

a) deux touches, l'une fixe et, l'autre mobile identiques respectivement aux touches (7) et (8) dont chaque tige (201) est surmontée d'une tête (202) présentant une fente (203) et un trou (204) dans lequel peut pivoter un cylindre orientable (205) lui-même percé d'un trou (206) dans le centre d'une face d'appui (207) pour permettre la mise en place d'un palpeur de filetage mâle (210) ou femelle (211) au travers d'un trou (209) de diamètre plus grand pratiqué dans ladite tête (202),

b) un axe (214) de même diamètre que les trous (206) du cylindre orientable (205) qui repose dans ces trous et prend appui sur deux cales-étalons identiques (215) pour le réglage de la mise en place dans le même axe de palpeurs de filetage, mâle et femelle, et dans un plan parallèle à la face d'appui de la table de mesure (2),

c) des vis (213) qui bloquent les cylindres orientables (205) et des vis des supports de touches pour bloquer celles-ci en hauteur, assurant le réglage de ces organes.

11. Table de contrôle dimensionnel universel suivant la revendication 1, caractérisée en ce qu'elle comporte également deux touches particulières se substituant aux touches fixes et mobiles (7, 8) présentant une tête (217) comportant une fente (218) dans laquelle peut pivoter par rapport à l'axe matérialisé par un trou (219) et une vis (220) un doigt orientable (221) dont la partie verticale présente à son extrémité un trou (224) à épaulement (225) pour recevoir librement mais sans jeu l'un des deux palpeurs de filetage mâle ou femelle.

**Claims**

1. All-purpose dimensional gauge table for internal and external measures comprising a comparator enabling to check a dimension by turning-back between a fixed key (7) mounted on a pin and a mobile key (8) by comparing with a predetermined calibration, characterized in that it comprises the following components :

a) a first support (12) for the fixed key (7), the pin of the fixed key (7) and that of the comparator being placed in a same vertical plane, and the support (12), the lower part of which has a cross-section in the shape of an inverted isoceles trapezium, lying on a slide (17), of the same cross-section recessedly made in a cylindrical body (1) carrying a measuring table (2),

b) the first support (12) comprising a key wedge (15) having a cylindrical shape with a longitudinal flat part, a screw (16) of which causes the pivotment in a bore (13) which crosses through the first support (12) by bearing on one of the sides of this flat part for ensuring a wedging of said key wedge (15) against the lower face of the measuring table (2),

c) a second support (20), in a square shape, ensuring the centering and the perpendicular positioning of the mobile key (8) relatively to the measuring table (2) provided with a bearing surface ; this centering and positioning of the mobile key (8) being obtained by the second support (20) through a mobile pin (22) to which it is secured and a fixed pin (21) secured to said cylindrical body (1), the fixed pin (21) being parallel to the mobile pin (22),

d) three ball bearings (23, 25, 26) with one of which (23) being housed in the second support (20) and the two other (25, 26) in the wall of the body (1) and two protecting caps are fixed on this same body (1) for outerly protecting the two ends of the mobile pin (22).

2. All-purpose dimensional gauge table according to claim 1, characterized in that a serrated wheel (11), outwardly protruding from the cylindrical body (1) for enabling the inversion of the movement inwardly and outwardly of the mobile key (8), is made by two vertical shoulders, a lower one and an upper one, the upper shoulder being covered by a torsion spring (33), a lower end of which is vertical and placed into a hole (35) of the serrated wheel (11) and an upper end of which is horizontal and passes through a piercing (37) of a free driving washer (38) the axis of which is fixed to the second support (20).

3. All-purpose dimensional gauge table according to claim 2, characterized in that the torsion spring (33) adjusts the calibration of the palpation pressure of the mobile key (8) and exerts a progressive pressure on the serrated wheel (11) in one and the other rotation direction of the latter.

4. All-purpose dimensional gauge table according to one of claims 2 or 3, characterized in that a ball (41) housed in a hole (42) made in the body (1) enables the blocking of the serrated wheel (11) by wedging between the upper surface thereof and the end of a needle-screw (40) the control of which is situated outside of the measuring table (2).

5. All-purpose dimensional gauge table according to claim 1, characterized in that the mobile key (8) is activated by a handling member comprising :

a) a fork (10) rotating in one direction or in the other, by acting on a handling finger (45) which is fixed with the fork (10) and which is accessible from the outside of the measuring table (2),

b) a recess (46) made in the fork (10) drives a roller (48) of a return finger (47) and linearly moves the second support (20) through a return means (49).

6. All-purpose dimensional gauge table according to claim 5, characterized in that a first pair of needle-screws (53, 54) act on two screws (52) moving in two grooves (50, 51) situated on a same circle and which are symetrical and of a depth increasing from a finger (45) to the said recess (46), the latter being placed on the upper surface of the fork (10) for enabling the adjustment of the stroke amplitude of the mobile key (8) and of its position in the said vertical plane.

7. All-purpose dimensional gauge table according to claim 5, characterized in that a second pair of needle-screws (56, 57), adjusted from the outside for enabling the rotation of the fork (10), are provided with ends which form abutments for two vertical planes (58, 59) of a semi-collar (55) placed at the upper surface of the fork (10) and integral therewith for adjusting the stroke amplitude of the mobile key (8) and its position in the said vertical plane.

8. All-purpose dimensional gauge table according to claim 1, characterized in that it further comprises two keys (68) provided for checking the threadings and each comprising a palpation head (69) in the form of an isoceles triangle, of a thickness equal to half a pitch of the threading to be checked and edges parallel therebetween and perpendicular to the two surfaces of the palpation heads (69), each palpation head (69) having, at its pointed end, a flat part or nose (A or A') parallel to its base (BC, B'C').

9. All-purpose dimensional gauge table according to one of claims 1, 7 and 8, characterized in that it further comprises :

a) a reference block (101) in the shape of a parallelepiped rectangle, having two opposed V-shaped slots of an angle equal to that of the noses, is used with two calibration wedges having a height H and H plus or minus half a pitch (= H') for checking the outer threedings ; the block (101) bearing on the measuring table (2) by one of its greater sides,

b) two thin keys (102, 103) mounted on two intermediary supports (64, 65) and two adjustable removable small table (100) secured on the table (2) enabling the check of small diameter inner threedings,

c) removable small tables (100), for the check of parts of small dimensions, being screwed on the table (2) in threaded holes (5), the body of the screws used for this purpose passing through a lower operture (66) and a head supported on a shoulder generated by an upper aperture (67) in which it is embedded.

10. All-purpose dimensional gauge table according to claim 1, characterized in that it also comprises :

a) two keys, a fixed one and a movable one, respectively identical to the keys (7) and (8), with each stem (201) being overtopped by a head (202) having a slot (203) and a hole (204) in which can pivot an orientable cylinder (205) itself pierced with a hole (206) in the center of a supporting face (207) for enabling to place a male (210) or female (211) threading feeler through a hole (209) of a greater diameter, provided in said head (202),

b) a pin (214) of a same diameter as the holes (206) of the orientable cylinder (205) which is supported in these holes and bears on two identical calibration wedges (215) for the adjustment of the positioning, in the same axis, of threading feelers, one male and one female, and in a plane parallel to the supporting face of the measuring table (2),

c) screws (213) which lock the orientable cylinders (205) and screws of the key supports for locking the latter in height, ensuring thereby the adjustment of these members.

11. All-purpose dimensional gauge table according to claim 1, characterized in that it also comprises two particular keys serving as a substitute for the fixed and mobile keys (7, 8) and having a head (217) comprising a slot (218) in which can pivot, relatively to the axis materialized by a hole (219) and a screw (220), an orientable finger (221) the vertical part thereof has, at its end, a hole (224) with a shoulder (225) for freely receiving, but with no clearance, one of two threading feelers, a male one or a female one.

**Patentansprüche**

1. Universeller Messtich zur Kontrolle vom Innen- und Aussenmassen, die eine Messlehre aufweist und es erlaubt, eine räumliche Grösse durch eine Rückwärtsbewegung zwischen einer feststehenden, auf einer Achse gelagerten Taste (7) und einer beweglichen Taste (8) durch den Vergleich mit einer vorher bestimmten Eichung zu prüfen, dadurch gekennzeichnet, dass er folgende Bestandteile aufweist :

a) eine erste, für die feststehende Taste (7) bestimmte Unterlage (12), wobei die Achse der feststehenden Taste (7) und die Achse der Messlehre in einer vertikalen Ebene angeordnet sind und die Unterlage (12), deren Unterteil im Querschnitt die Form eines umgekehrten gleichschenkligen Trapezes aufweist, von einer Gleitschiene (17) gleichen Querschnitts getragen wird, die in einem zylindrischen, den Messtisch (2) tragenden Körper (1) ausgespart ist,

b) wobei die erste Unterlage (12) eine zylindrische, mit einer in Längesrichtung verlaufenden Abflachung versehene Keilfeder (15) aufweist, die sich mit Hilfe einer Schraube (16) in einer durch die erste Unterlage (12) gehende Bohrung (13) dreht, indem eine der Seiten dieser Abflachung zur Anlage kommt, um eine Verkeilung der Keilfeder (15) gegenüber der Unterseite des Messtisches (2) zu erzielen,

c) wobei eine zweite, winkelförmige Unterlage die Zentrierung und die Positionierung der beweglichen Taste (8) in einer zum Messtisch senkrechten Lage gewährleistet und diese Zentrierung sowie diese Positionierung der beweglichen Taste (8) durch die zweite Unterlage (20) mit Hilfe einer beweglichen Achse (22) erreicht werden, die mit ihr fest verbunden ist, und einer feststehenden Achse (21), die mit dem zylindrischen Körper (1) fest verbunden ist, wobei die feststehende Achse (21) zur beweglichen Achse (22) parallel verläuft,

d) drei Kugellager (23, 25, 26), von denen eines (23) in der zweiten Unterlage (20) und die zwei anderen (25, 26) in der Körperwandung (1) untergebracht sind, und zwei Schutzkapper (27) auf dem Körper (1) befestigt sind, um nach aussen die beiden Enden der beweglichen Achse (22) zu schützen.

2. Universeller Messtisch nach Anspruch 1, dadurch gekennzeichnet, dass eine Rändelrolle (11), die über äussere Oberfläche des zylindrischen Körpers (1) ragt, um die Umkehrung der Bewegung der beweglichen Taste (8) nach innen und nach aussen zu gestatten, aus zwei vertikalen Schultern, einer unteren und einer oberen, besteht, wobei die obere Schulter durch eine Torsionsfeder überdeckt wird, deren ein unteres Ende senkrecht ist und sich in einem Loch (35) der Rändelrolle (11) befindet und deren ein oberes Ende horizontal ist und durch die Bohrung (37) einer Einlage (38) geht, die nicht angetrieben wird und deren Achse mit der zweiten Unterlage (20) festgebunden ist.

3. Universeller Messtich nach Anspruch 2, dadurch gekennzeichnet, dass die Torsionsfeder (33). das Tarieren des Tastdruckes der beweglichen Taste (8) einstellt und auf die Rändelrolle in deren beiden Drehrichtungen einer allmählich zunehmenden Druck ausübt.

4. Universeller Messtisch nach einem der Ansprüche 2 oder 3, dadurch gekennzeichnet, dass eine Kugel (41), die sich in einem im Körper (1) ausgesparten Loch (42) befindet, die Arretierung der Rändelrolle (11) und dem Ende einer Nadelschraube (40) gestattet, deren Antriebsvorrichtung ausserhalb des Messtisches (2) angeordnet ist.

5. Universeller Messtisch nach Anspruch 1, dadurch gekennzeichnet, dass die bewegliche Taste (8) durch eine Betätigungsvorrichtung angetrieben wird, bei welcher :

a) eine Gabel (10) sich in einer oder anderer Richtung dreht, wenn ein Finger (45) betätigt wird, der mit der Gabel (10) festgebunden ist und von ausserhalb des unteren Teils des Messtisches (2) zugänglich ist,

b) eine in der Gabel (10) ausgesparte Ausnehmung (46) eine Rolle (48) eines Umlenkfingers (47) mitnimmt und über eine Umlenkvorrichtung (49) den zweiten Halter (20) linear verschiebt.

6. Universeller Messtisch nach Anspruch 5, dadurch gekennzeichnet, dass ein erstes Paar von Nadelschrauben (53, 54) auf zwei Schrauben (52) wirkt, die sich in zwei Nuten (50, 51) bewegen, die symetrisch auf demselben Kreis angeordnet sind und deren Tiefe in der Richtung von einem Finger (45) bis zur obengenannten Ausnehmung (46) zunimmt, wobei letztere auf der Oberseite der Gabel (10) ausgespart ist, um die Einstellung der Hublänge der beweglichen Taste (8) und deren Lage in der senkrechten Ebene zu ermöglichen.

7. Universeller Messtisch nach Anspruch 5, dadurch gekennzeichnet, dass ein zweites Paar von Nadelschrauben (56, 57) die von ausserhalb her eingestellt werden, um die Drehbewegung der Gabel (10) zu ermöglichen, an ihren Enden Auschläge für zwei senkrechte Ebenen (58, 59) eines Halbkragens (55) aufweisen, der an der Oberseite der Gabel (10) liegt und mit ihr einstückig wirkt, um die Hublänge der beweglichen Taste (8) und deren Lage in der senkrechten Ebene einzustellen.

8. Universeller Messtisch nach Anspruch 1, dadurch gekennzeichnet, dass er zusätzlich zwei Tasten (68) aufweist, die zur Prüfung der Gewinde bestimmt sind und je einer Abtastkopf besitzen, welche die Form eines gleichschenkligen Dreieeks aufweisen, deren Dicke der halben Steigung des zu prüfenden Gewindes entspricht und welche zueinander parallel verlaufende, zu den beiden Seiten der Abtastköpfe senkrechte stehende Schnitten aufweisen, wobei jeder Abtastkopf (69) an seinem spitzen Ende eine Abflachung oder eine Nase (A, A') besitzt, die zu seiner Basis (BC, B'C') parallel verläuft.

9. Universeller Messtisch nach einem der Ansprüche 1, 7 und 8, dadurch gekennzeichnet, dass er zusätzlich folgendes enthält :

a) einen Referenzblock (101), der die Form eines rechtwinkligen Quaders hat und zwei entgegengesetzte, V-förmige Nuten aufweist, deren Winkel demjenigen der Nosen entspricht, wobei der Block (101) zur Prüfung der Aussengewinde in Verbindung mit zwei vergleichsnormalen Keilen, die eine Höhe H oder eine um eine halbe Gewindesteigung vermehrte oder verminderte Höhe H (= H') haben, benutzt wird und entlang einer seiner langen Seiten auf dem Messtisch (2) liegt,

b) zwei Feintasten (102, 103), die auf zwei Zwischenhaltern (64, 65) angeordnet sind, und zwei abnehmbare, einstellbare Plättchen (100), die auf dem Tisch (2) festgebunden sind und die Prüfung von Innengewinden kleinen Durchmessers erlauben,

c) abnehmbare Plättchen (100), die zur Prüfung von Teilen kleiner Abmessungen bestimmt sind und in durch Gewindeschneiden ausgesparten Bohrungen (5) im Tisch (2) verschraubt werden, wobei der Körper der betreffenden Schrauben in eine untere Öffnung (66) eingesetzt wird und ein Kopf an eine in einer oberen Offnung (67) gebildete Schulter anliegt, in welche er sich einbaut.

10. Universeller Messtisch nach Anspruch 1, dadurch gekennzeichnet, dass er auch enthält :

a) zwei Tasten, von denen eine feststehend und die andere beweglich ist, die den entsprechenden Tasten (7) und (8) identisch sind und bei denen jeder Schaft (201) einen Kopf (202) trägt, der einen Schlitz (203) und eine Bohrung (204) aufweist, in welcher sich ein Zylinder (205) drehen kann, der mit einer in der Mitte einer Anlagefläche (207) ausgesparten Bohrung (206) versehen ist, um das Einsetzen eines Gewindeabtasters mit Patrizienteil (210) oder Matrizienteil (211) in eine Bohrung (209) grösseren Durchmessers, die im Kopf (202) augespart ist,

b) eine Achse (214), die denselben Durchmesser wie die Bohrungen (206) des ausrichtbaren Zylinders (20) aufweist, in diesen Bohrungen eingesetzt ist und sich auf zwei identischen vergleichsnormalen Keilen (215) abstützt, um die Einstellung der Lage auf derselben Achse der Gewindeabtaster mit Patrizienteil und Matrizienteil und in einer zur Anlagefläche des Messtisches (2) verlaufenden Ebene,

c) Schrauben (213), welche die ausrichtbaren Zylinder (205) arretieren, und weitere Schrauben, die in den Tastenhaltern eingesetzt werden, um die Tasten in der Höhe zu arretieren und deren Einstellung zu sichern.

11. Universeller Messtisch nach Anspruch 1, dadurch gekennzeichnet, dass er statt den feststehenden und beweglichen Tasten (7, 8) zwei besondere Tasten aufweist, die je einen Kopf (217) mit einem Schlitz (218) besitzen, in welchen ein ausrichtbarer Finger (221) in bezug auf die durch eine Bohrung (219) und eine Schraube (220) dargestellte Achse schwenken kann, wobei dieser Finger am Ende seines oberen Teils eine mit einer Schulter (225) versehene Bohrung (224) aufweist, um frei jedoch spiellos das eine der zwei Gewindeabtaster mit Patrizienteil oder Matrizienteil aufnehmen zu können.

Fig. 1

Fig. 2

Fig. 3

Fig. 4

Fig. 5

Fig. 6

Fig.7

# Fig.8

# Fig.9

# Fig.10

Fig. 11

Fig.12

Fig.13

Fig.14

61
62
60

Fig.15

60a
61a
60a
62a

Fig.16

E

Fig.17

A

Fig.18  60b  61b

62b

8

0 113 295

Fig. 19

Fig. 20

Fig.21

Fig.22

Fig.23

Fig.24

# Fig. 25

67
66
100

# Fig. 26

70
69
68

B B'
A
A'
C C'
71    72

**Fig.27**

**Fig.28**

**Fig.29**

0 113 295

Fig. 30

Fig. 31

102

103

104

Fig. 32

Fig. 33

106

106

107

107

108

13

Fig.35

Fig.34

75

74

110

110

73

Fig.36

110

111

112

x    y

Fig.37

114

113

114

# Fig.38

# Fig.39

## Fig.40

116

113

## Fig.41

120

76

## Fig.42

120   76

113

116

Fig. 43

120

113

Fig. 44

120

113

16

16

15

15

Fig. 45

FIG.46

FIG.47

# FIG.48

# FIG.49

FIG.50

226 218 224 225 227

219

220 223 221

217 222

216

FIG.51

0 113 295